# EUROPEAN PATENT APPLICATION

(11) **EP 3 225 509 A1**
(43) Date of publication of application: **04.10.2017**
(21) Application number: 17162225.1
(22) Date of filing: 22.03.2017
(51) Int. Cl.: B62D 5/04

(54) **MOTIVE POWER TRANSMISSION MECHANISM AND STEERING DEVICE**

(30) Priority: 29.03.2016 JP 2016066910
(71) Applicant: Showa Corporation, Gyoda City Saitama 361-8506 (JP)
(72) Inventor: SEKIKAWA, Shinsuke, Haga-gun, Tochigi, 321-3325 (JP)
(74) Representative: Nordmeyer, Philipp Werner

(57) **Abstract**

A motive power transmission mechanism includes a motor (300), a drive pulley (303), a driven pulley (304), a belt (305), a housing and a cap (404). The motor includes an output shaft and a motor main body (301). The drive pulley is configured to rotate together with the output shaft. The belt is wound across the drive pulley and the driven pulley to transmit torque from the drive pulley to the driven pulley. The housing accommodates the drive pulley, the belt, and the driven pulley. The housing includes a work window (312, 313) which faces the belt and through which the belt undergoes work from outside of the housing. The cap is configured to close the work window when the work is not performed. The cap includes a porous portion (405, 406) having air-permeability and water-impermeability.

## Description

### BACKGROUND OF THE INVENTION

### FIELD OF THE INVENTION

The present invention relates to a motive power transmission mechanism and a steering device.

### DISCUSSION OF THE BACKGROUND

An Electric Power Steering (EPS) system and a Steer-By-Wire (SBW) steering system include a motor to exert wheel-turning assist force or wheel-turning force. Japanese Unexamined Patent Application Publication No. 2015-174615 discloses that motive power generated by such a motor is transmitted to a conversion mechanism through a belt-drive motive power transmission mechanism, for example, and converted into force in an axial direction of a wheel-turning shaft in the conversion mechanism.

### SUMMARY OF THE INVENTION

According to one aspect of the present invention, a motive power transmission mechanism includes a motor, a drive pulley, a driven pulley, a belt, a housing, and a cap. The motor includes an output shaft and a motor main body. The drive pulley is configured to rotate together with the output shaft. The belt is wound across the drive pulley and the driven pulley to transmit torque from the drive pulley to the driven pulley. The housing accommodates the drive pulley, the belt, and the driven pulley.

The housing includes a work window which faces the belt and through which the belt undergoes work from outside of the housing. The cap is configured to close the work window when the work is not performed. The cap includes a porous portion having air-permeability and water-impermeability.

According to the other aspect of the present invention, a steering device includes a motive power transmission mechanism. The motive power transmission mechanism includes a motor, a drive pulley, a driven pulley, a belt, a housing, and a cap. The motor includes an output shaft and a motor main body. The drive pulley is configured to rotate together with the output shaft. The belt is wound across the drive pulley and the driven pulley to transmit torque from the drive pulley to the driven pulley. The housing accommodates the drive pulley, the belt, and the driven pulley. The housing includes a work window which faces the belt and through which the belt undergoes work from outside of the housing. The cap is configured to close the work window when the work is not performed. The cap includes a porous portion having air-permeability and water-impermeability.

### BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:
FIG. 1 is a diagram illustrating an exemplary configuration of a steering device according to embodiment 1;
FIGs. 2A and 2B are perspective views of an exemplary configuration of a wheel-turning force generator and components surrounding it in embodiment 1;
FIG. 3 is a side view of the exemplary configuration of the wheel-turning force generator and components surrounding it in embodiment 1;
FIG. 4 is a cross-sectional view taken along the line A-A in FIGs. 2A, 2B, and 3;
FIGs. 5A and 5B are cross-sectional views of a cap in embodiment 1;
FIGs. 6A and 6B are perspective views of the cap in embodiment 1;
FIGs. 7A and 7B are perspective views of a cap and components surrounding it in embodiment 3; and
FIG. 8 is a cross-sectional view taken along the line B-B in FIG. 7A.

### DESCRIPTION OF THE EMBODIMENTS

The embodiments will now be described with reference to the accompanying drawings, wherein like reference numerals designate corresponding or identical elements throughout the various drawings.

### Embodiment 1

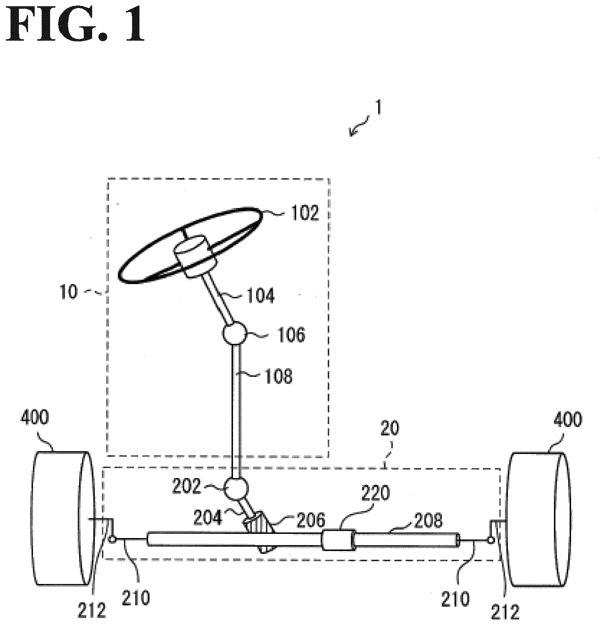

Embodiment 1 will be described with reference to FIGs. 1 to 6B.

FIG. 1 is a diagram illustrating an exemplary configuration of a steering device 1 according to embodiment 1. As illustrated in FIG. 1, the steering device 1 includes a steering unit 10, a wheel-turning unit 20, and a controller (not illustrated in FIG. 1). The steering unit 10 accepts a driver's steering operation. The wheel-turning unit 20 turns wheels 400 in accordance with the steering operation accepted by the steering unit 10. It is noted that in the steering device 1 described below, the Electric Power Steering system to make the motor exert assist force is employed. This, however, should not limit embodiment 1. The Steer-By-Wire steering system may be employed in which a torque transmission path between the steering unit 10 and the wheel-turning unit 20 can be mechanically coupled and uncoupled, and in which when the torque transmission path is uncoupled, a turning angle of the wheels 400 is electrically controlled in accordance with the steering operation accepted by the steering unit 10.

### Steering Unit 10

As illustrated in FIG. 1, the steering unit 10 includes a steering member 102, a steering shaft 104, a first universal joint 106, and an intermediate shaft 108. The steering member 102, the steering shaft 104, and the intermediate shaft 108 are coupled to each other in a torque transmittable manner. In this description, "coupled in a torque transmittable manner" refers to coupling of a first member to a second member in such a manner that the second member rotates in accordance with rotation of the first member. For example, its signification at least includes a case where the first member and the second member are integral to each other, a case where the second member is directly or indirectly secured to the first member, and a case where the first member and the second member are coupled to each other through a component such as a joint in such a manner that the first member and the second member operate in conjunction with each other.

In embodiment 1, an upper end of the steering shaft 104 is secured to the steering member 102 in such a manner that the steering member 102 and the steering shaft 104 integrally rotate. A lower end of the steering shaft 104 and an upper end of the intermediate shaft 108 are coupled through the first universal joint 106 in such a manner that the steering shaft 104 and the intermediate shaft 108 operate in conjunction with each other.

It is noted that "upper end" refers to an end portion on the upstream side in the transmission path of steering force in accordance with a steering operation by the driver (namely, an end on the input side) while "lower end" refers to an end portion on the downstream side in the transmission path of steering force (namely, an end on the output side) (the same will apply below).

As illustrated in FIG. 1, a steering wheel having a ring shape is taken as an example of the steering member 102. This, however, should not limit embodiment 1. A device having other shape and mechanism may be used insofar as the device is capable of accepting a steering operation by the driver.

### Wheel-Turning Unit 20

The wheel-turning unit 20 is a configuration to turn the wheels 400 in accordance with a steering operation by the driver which has been accepted by the steering unit 10.

As illustrated in FIG. 1, the wheel-turning unit 20 includes a second universal joint (universal joint) 202, a pinion shaft (input shaft) 204, a pinion gear 206, a rack bar (wheel-turning shaft) 208, tie rods 210, knuckle arms 212, and a wheel-turning force generator (motive power transmission mechanism) 220. The intermediate shaft 108, the pinion shaft 204, and the pinion gear 206 are coupled to each other in a torque transmittable manner.

In embodiment 1, the pinion gear 206 is secured to a lower end of the pinion shaft 204 and rotates together with the pinion shaft 204. A lower end of the intermediate shaft 108 and an upper end of the pinion shaft 204 are coupled through the second universal joint 202 in such a manner that the intermediate shaft 108 and the pinion shaft 204 operate in conjunction with each other.

The rack bar 208 is a configuration to turn the wheels 400 in accordance with rotation of the pinion gear 206. Rack teeth to mesh with the pinion gear 206 are formed on the rack bar 208.

In the steering device 1 having the above-described configuration, when the driver performs a steering operation through the steering member 102, the pinion gear 206 is rotated to displace the rack bar in an axial direction of the rack bar. Thus, through the tie rods 210 on both ends of the rack bar, and the knuckle arms 212 coupled to the tie rods 210, the wheels 400 are turned.

In the example illustrated in FIG. 1, steering force is transmitted between the pinion shaft 204 and the rack bar through the pinion gear 206 and the rack teeth. This, however, should not limit embodiment 1. Other configurations may be employed insofar as the steering force can be transmitted between the pinion shaft 204 and the rack bar. Wheel-Turning Force Generator

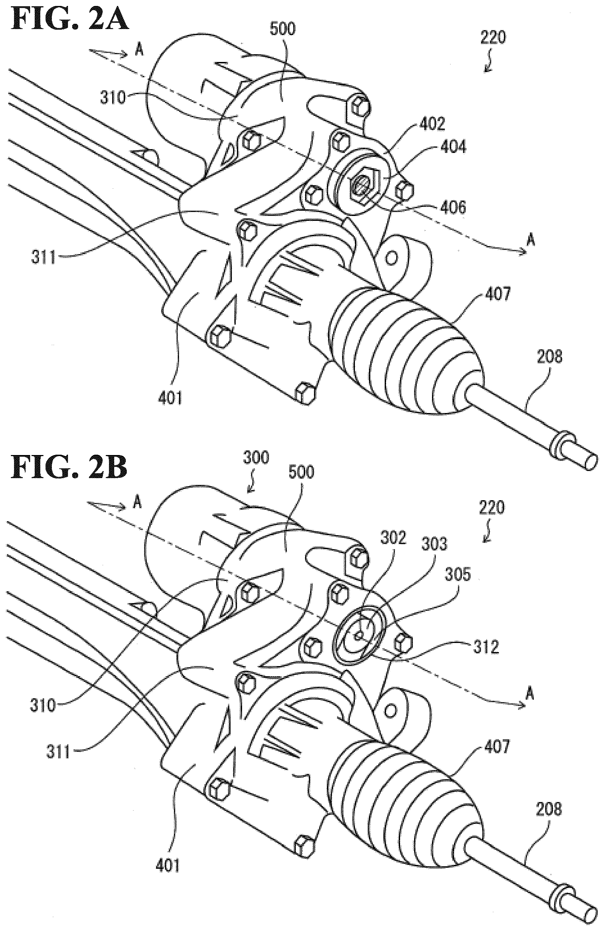

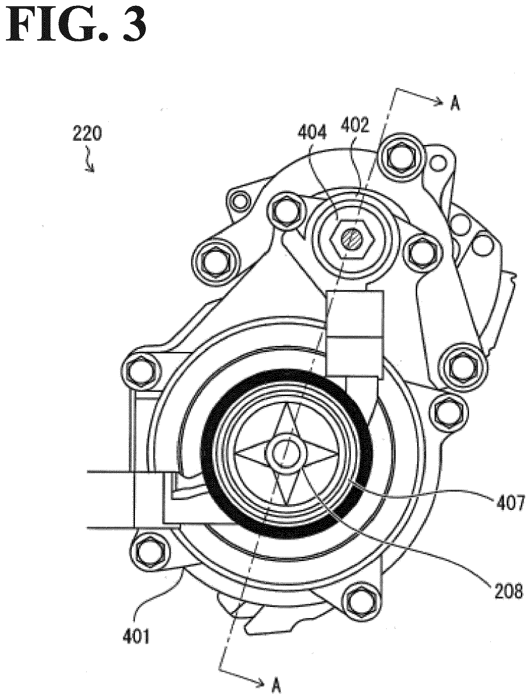

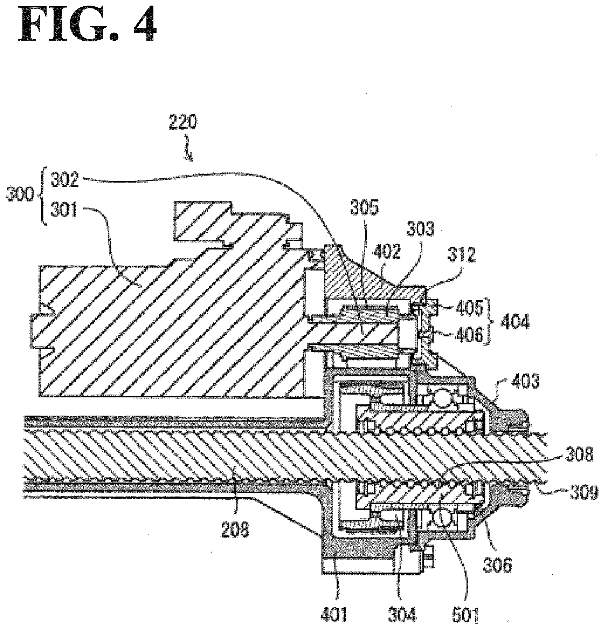

FIGs. 2A and 2B are perspective views of an exemplary configuration of the wheel-turning force generator 220 and components surrounding it. FIG. 3 is a side view of the exemplary configuration of the wheel-turning force generator 220 and components surrounding it. FIG. 4 is a cross-sectional view taken along the line A-A in FIGs. 2A, 2B, and 3.

As illustrated in FIGs. 2A to 4, the wheel-turning force generator 220 includes a motor 300, a drive pulley 303, a driven pulley 304, a belt 305, a conversion mechanism 306, a first housing 401, a second housing 402, a third housing 403, a cap 404, and a boot 407, for example. It is noted that part of the wheel-turning force generator 220 (the drive pulley 303, the driven pulley 304, and the belt 305) functions as the motive power transmission mechanism.

The motor 300 includes a motor main body 301 and an output shaft 302. The drive pulley 303 is arranged to rotate together with the output shaft 302. The belt 305 is wound across the drive pulley 303 and the driven pulley 304 to transmit torque from the drive pulley 303 to the driven pulley 304.

The driven pulley 304 is secured to a nut 501. Consequently, the torque, which has been transmitted from the drive pulley 303 to the driven pulley 304, is transmitted to the nut 501.

The conversion mechanism 306 is a configuration to convert rotation of the driven pulley 304 into linear movement of the rack bar 208 in the axial direction. In the conversion mechanism 306 illustrated in FIG. 4, what is called a ball screw mechanism is employed. The ball screw mechanism includes the nut 501, a spiral groove 309, and a plurality of rolling balls (not illustrated). The nut 501 has an inner surface in which a spiral groove 308 is formed. The nut 501 is driven into rotation by torque generated by the motor 300. The spiral groove 309 is formed in an outer surface of the rack bar 208 and has the same pitch as the spiral groove 308 of the nut 501. The rolling balls are held between the spiral groove of the nut 501 and the spiral groove of the rack bar 208.

It is noted that the specific configuration of the conversion mechanism 306 should not be limited to the above-described example. Other configurations may be employed insofar as rotation of the driven pulley 304 can be converted into linear movement of the rack bar 208 in the axial direction.

In this description, the motor main body 301 includes components to rotate the output shaft 302, a case 310 (see FIGs. 2A and 2B) to accommodate these components, and a controller 500, described later. As illustrated in FIGs. 2A and 2B, the case 310 includes a flange 311. A bolt (not illustrated) inserted in a through hole formed in the flange 311 is tightened to secure the motor main body 301 to the second housing 402. The motor main body 301 also includes a component similar to the flange 311 on a side opposite to the flange 311 side, as viewed from the output shaft 302.

### Controller

The controller 500 at least has a configuration to control torque generated by the motor 300 in accordance with a steering operation by the driver. In the example illustrated in FIGs. 2A and 2B, the controller 500 is disposed on the output shaft side of the motor 300 and included in the motor main body 301.

The controller 500 may include an Engine Control Unit (ECU) to control the engine, and a resolver sensor to detect a rotation angle of the output shaft 302, for example.

It is noted that the controller 500 may be disposed on a side opposite to the output side of the motor 300.

### Housing

As illustrated in FIG. 4, the first housing 401 accommodates part of the rack bar 208, part of the conversion mechanism 306, and the driven pulley 304. The boot 407 is attached to the first housing 401.

As illustrated in FIG. 4, the second housing 402 is secured to the first housing 401 and accommodates the output shaft 302 and the drive pulley 303. As illustrated in FIG. 4, a thin elongated hole is formed in the second housing 402. A bolt (not illustrated) to secure the motor main body 301 to the second housing 402 is inserted in the thin elongated hole. Also, the second housing 402 includes a work window 312 that faces the belt 305 to work on the belt 305 from outside of the second housing 402.

In embodiment 1, as illustrated in FIG. 4, the work window 312 faces the position where the belt 305 is wound on the drive pulley 303. The cap 404 is detached from the third housing 403 to check how the belt 305 is wound on the drive pulley 303 through the work window 312.

It is noted that the work window 312 being disposed to face the belt 305 implies that a desired kind of work on the belt 305 can be performed through the work window 312. In embodiment 1, as illustrated in FIG. 4, it implies that the work window 312 is disposed at such a position that the position where the belt 305 is wound on the drive pulley 303 can be visually checked through the work window 312. Confirming the state of winding of the belt 305 on the drive pulley 303 refers to visually checking whether the belt 305 is normally wound on the drive pulley 303.

The work window 312 should not be limited to any particular shape. It may have a desired shape such as a circle and a polygon. The size of the work window 312 may be set as desired in accordance with a width of the belt 305, for example.

In embodiment 1, the work window 312 is formed in the second housing 402 to face the position where the belt 305 is wound on the drive pulley 303. The present invention, however, should not be limited to this configuration. In one modification, for example, the work window 312 may be formed in the first housing 401 to face a position where the belt 305 is wound on the driven pulley 304 so as to check how the belt 305 is wound on the driven pulley 304.

The third housing 403 is secured to the first housing 401 and accommodates other part of the rack bar 208.

It is noted that the first housing 401, the second housing 402, and the third housing 403 constitute one housing as a whole, and that at least a part of the first housing 401, the second housing 402, and the third housing 403 may be integrally formed.

### Cap

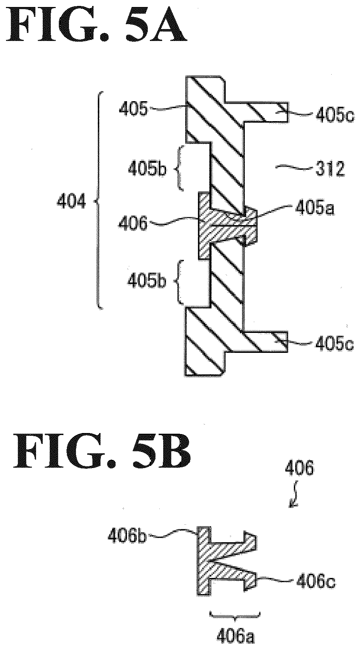

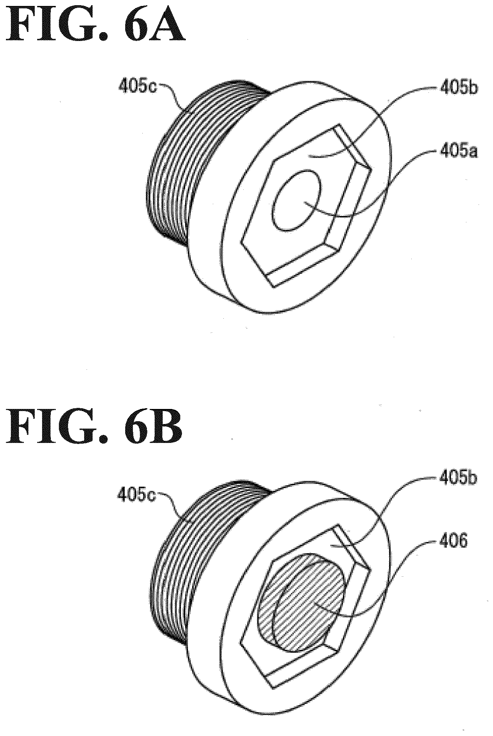

Next, by referring to FIGs. 4 to 6B, the cap 404 will be described. FIGs. 5A and 5B are cross-sectional views of an example of the cap 404, and FIGs. 6A and 6B are perspective views of the example of the cap 404.

As illustrated in FIG. 4, the cap 404 is attached to the second housing 402 to cover an end portion of the output shaft 302 on a side opposite to the motor main body 301 side. When work on the belt 305 is not performed, the cap 404 closes the work window 312.

As illustrated in FIGs. 5A to 6B, the cap 404 includes a cap main body 405 and a porous portion 406. The cap main body 405 has a through hole 405a and a recess 405b. The porous portion 406 has air-permeability and water-impermeability and is inserted in the through hole 405a. In this manner, the porous portion 406 is attached to the cap 404 to close the work window 312 for the belt 305. This makes it possible to secure air-permeability of the housing (the second housing 402, for example) as desired without machining the housing.

In embodiment 1, part of the cap 404 is formed of the porous portion 405. The present invention, however, should not be limited to this configuration. For example, the whole cap 404 may be formed of porous material. Since the cost can be reduced while air-permeability and water-impermeability are secured, part of the cap 404 should preferably be formed of porous material.

As illustrated in FIGs. 5A and 5B, a threaded portion 405c of the cap main body 405 is formed to tighten the cap main body 405 in the second housing 402.

More specifically, as illustrated in FIGs. 6A and 6B, the threaded portion 405c is threaded to be screwed in the second housing 402. Since the threaded portion 405c of the cap main body 405 is screwed in the second housing 402, and since the cap main body 405 includes the porous portion 406, the porous portion 406 can be readily attached to the second housing 402. Moreover, the cap 404 can be readily detached from the second housing 402. Consequently, the state of winding of the belt 305 on the drive pulley 303 can be readily checked through the work window 312.

As illustrated in FIGs. 5A to 6B, the cap main body 405 includes the recess 405b to be fitted to a tool to rotate the cap main body 405. The through hole 405a is formed in the recess 405b.

In embodiment 1, as illustrated in FIGs. 6A and 6B, the recess 405b has such a hexagonal shape that a conventional tool such as a hexagonal wrench can be fitted to the recess 405b. With this configuration, the hexagonal wrench fitted to the recess 405b is rotated to readily screw the threaded portion 405c of the cap main body 405 in the second housing 402. In the present invention, the recess 405b should not be limited to hexagonal but may be rectangular or pentagonal insofar as the recess can be fitted to the tool.

The size of the cap 404 may be set as desired to close the work window 312. Porous Member

The porous portion 406 has air-permeability and water-impermeability and is inserted in the through hole 405a of the cap main body 405.

As illustrated in FIG. 5B, the porous portion 406 includes a fitting portion 406a and a cover portion 406b. The fitting portion 406a is fitted in the through hole 405a. The cover portion 406b covers the through hole 405a. As obvious from FIG. 5B, the fitting portion 406a is bifurcated in such a manner that a distance between two divided parts of the fitting portion 406a increases from the cover portion 406b toward distal end portions 406c of the fitting portion 406a. A thickness of each of the two divided parts of the fitting portion 406a decreases from the cover portion 406b toward the distal end portion 406c. Each of the distal end portions 406c is thicker than any other part of the fitting portion 406a.

FIG. 6A illustrates a state of the porous portion 406 in which the porous portion 406 is not inserted in the cap main body 405. From this state, the porous portion 406 can be pressed into the cap main body 405, as illustrated in FIG. 6B. As illustrated in FIG. 5A, when the porous portion 406 is inserted in the through hole 405a of the cap main body 405, the two divided parts of the fitting portion 406a exert force in a direction perpendicular to a direction of insertion of the porous portion 406 in the through hole 405a, as illustrated in FIG. 5B, and in such a direction that the two divided parts become away from each other. Thus, the two divided parts are fitted in the through hole 405a. The distal end portions 406c are in close contact with a surface of the cap main body 405 on the work window 312 side. This arrangement prevents the porous portion 406 from readily coming off the cap main body 405 and also prevents matter other than gas from the outside from entering when the cap 404 is attached to the second housing 402 so as to secure water-impermeability.

In embodiment 1, the porous portion 406 may not necessarily include the cover portion 406b. The porous portion 406 may have a desired shape insofar as the porous portion 406 is in close contact with the cap main body 405 to prevent matter other than gas from the outside from entering when the cap 404 is attached to the housing (the second housing 402, for example) so as to secure water-impermeability. The porous portion 406 may not necessarily be formed to be inserted in the cap main body 405. For example, the porous portion 406 may be integral to the cap main body 405, and part or all of the cap 404 may be formed of porous material.

As the porous portion 406, any material may be employed insofar as it has air-permeability and water-impermeability. For example, porous polytetrafluoroethylene may be employed. Particularly, when the porous portion 406 is made of porous polytetrafluoroethylene, the porous portion 406 excels in air-permeability, water-impermeability, and high-temperature durability, for example.

As a material of porous polytetrafluoroethylene available on the market, Gore-Tex (registered trademark) can be given as an example.

The size of the porous portion 406 may be set as desired to close the through hole 405a of the cap main body 405.

### Embodiment 2

In embodiment 1, the work window 312 is used for checking how the belt 305 is wound on the drive pulley 303. Instead, the work window 312 may be used for winding the belt 305 on the drive pulley 303, for example.

Specifically, as illustrated in FIG. 4, the work window 312 faces the position where the belt 305 is wound on the drive pulley 303. That is, the work window 312 may be disposed at the same position as in embodiment 1.

In embodiment 2, the size of the work window 312 is the same as in embodiment 1. While the work window 312 in embodiment 1 is simply used for checking how the belt 305 is wound on the drive pulley 303, the work window 312 in embodiment 2 is used for actually winding the belt 305 on the drive pulley 303. Consequently, the work window 312 in embodiment 2 may be made larger than the work window 312 in embodiment 1. That is, an external shape of the work window 312 may be enlarged, and an outer diameter of the cap 404 to close the work window may be increased.

The work window 312 in embodiment 2 should not be limited to a particular shape but may have a desired shape such as a circle and a polygon. The size of the work window 312 may be set as desired in accordance with the width of the belt 305, for example.

With this configuration, even if the belt 305 is twisted and wound on the drive pulley 303, the belt 305 can be rewound on the drive pulley 303 to undo twisting of the belt 305. Thus, the belt 305 can be favorably wound on the drive pulley 303.

In a similar manner to embodiment 1, the work window 312 faces the position where the belt 305 is wound on the drive pulley 303. The work window 312, however, may be disposed to face the position where the belt 305 is wound on the driven pulley 304 so as to wind the belt 305 on the driven pulley 304. The work window 312 may be disposed to face both of the position where the belt 305 is wound on the drive pulley 303 and the position where the belt 305 is wound on the driven pulley 304.

### Embodiment 3

In embodiments 1 and 2, the work window 312 is used for checking how the belt 305 is wound on the drive pulley 303 and for winding the belt 305 on the drive pulley 303. Instead, a work window 313 may be opposed to a surface of the belt 305 wound across the drive pulley 303 and the driven pulley 304 so as to check the tension of the belt 305. Aspects of embodiment 3 different from embodiments 1 and 2 will be mainly described below.

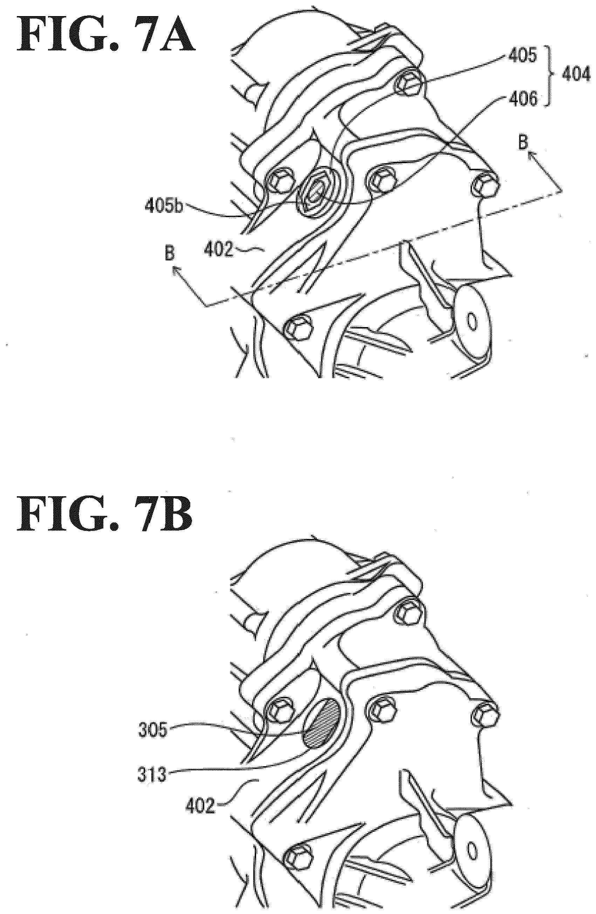

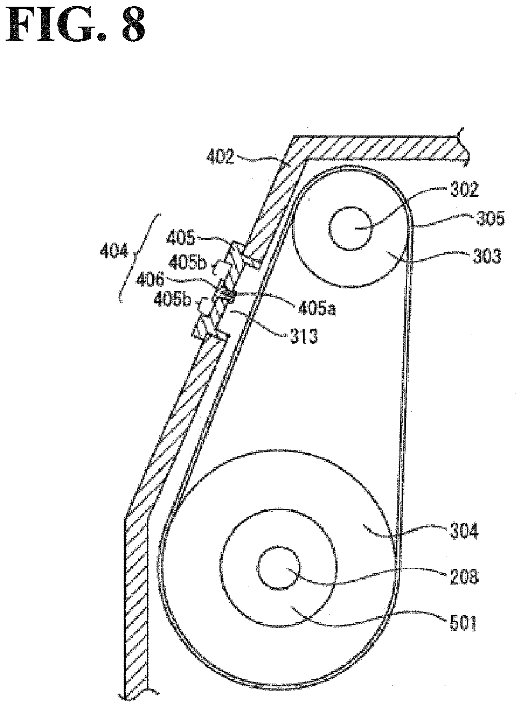

FIGs. 7A and 7B are perspective views of the cap 404 according to embodiment 3. FIG. 8 is a cross-sectional view taken along the line B-B in FIG. 7A. FIG. 8 illustrates required minimum components only. The other components are omitted from FIG. 8. As illustrated in FIG. 7A, the work window 313 is disposed on a plane perpendicular to the work window 312 in embodiments 1 and 2. As illustrated in FIG. 7B, when the cap 404 is detached from the second housing 402, the belt 305 can be seen through the work window 313.

As obvious from FIG. 8, the cap 404 is opposed to the surface of the belt 305 wound across the drive pulley 303 and the driven pulley 304. Consequently, when the cap 404 is detached from the second housing 402, tension of the belt 305 can be checked through the work window 313.

As a method of checking the tension of the belt 305 through the work window 313, a conventional measurement method of, for example, pushing the belt 305 with a rod and checking the tension may be employed.

The work window 313 in embodiment 3 should not be limited to a particular shape but may have a desired shape such as a circle and a polygon. The size of the work window 313 may be set as desired in accordance with the diameter of the checking rod, for example.

A housing (gearbox) to accommodate the motive power transmission mechanism need to have waterproofness. It is also necessary to prevent an increase of internal pressure of the housing so as to avoid deformation of a component (such as a boot) attached to the housing.

In order to solve the situations, porous material having air-permeability and water-impermeability, for example, may be attached to the housing to allow the air flow in and out of the housing. In order to attach the porous material to the housing, however, it is necessary to machine the housing. This may restrict a position where the porous material can be attached, and this also takes the machining cost.

The embodiments suitably secure air-permeability of the housing to accommodate the motive power transmission mechanism.

Obviously, numerous modifications and variations of the present invention are possible in light of the above teachings. It is therefore to be understood that within the scope of the appended claims, the present invention may be practiced otherwise than as specifically described herein.

## Claims

1. A motive power transmission mechanism comprising:
a motor comprising:
an output shaft; and
a motor main body;
a drive pulley configured to rotate together with the output shaft;
a driven pulley;
a belt wound across the drive pulley and the driven pulley to transmit torque from the drive pulley to the driven pulley;
a housing accommodating the drive pulley, the belt, and the driven pulley, the housing comprising a work window which faces the belt and through which the belt undergoes work from outside of the housing; and
a cap configured to close the work window when the work is not performed, the cap comprising a porous portion comprising air-permeability and water-impermeability.

2. The motive power transmission mechanism according to claim 1, further comprising:
a wheel-turning shaft movable in an axial direction of the wheel-turning shaft to turn wheels; and
a conversion mechanism configured to convert rotation of the driven pulley into movement of the wheel-turning shaft in the axial direction of the wheel-turning shaft,
wherein the housing accommodates a part of the wheel-turning shaft and a part of the conversion mechanism.

3. The motive power transmission mechanism according to claim 1,
wherein the work window faces a position where the belt is wound on the drive pulley or the driven pulley, and
wherein the work comprises checking how the belt is wound on the drive pulley or the driven pulley.

4. The motive power transmission mechanism according to claim 1,
wherein the work window faces a position where the belt is wound on the drive pulley or the driven pulley, and
wherein the work comprises winding the belt on the drive pulley or the driven pulley.

5. The motive power transmission mechanism according to claim 1,
wherein the work window is opposed to a surface of the belt wound across the drive pulley and the driven pulley, and
wherein the work comprises checking tension of the belt.

6. The motive power transmission mechanism according to any one of claims 1 to 5, wherein the cap comprises
a cap main body comprising a through hole, and
the porous portion inserted in the through hole.

7. The motive power transmission mechanism according to claim 6, wherein the porous portion comprises
a cover portion configured to cover the through hole, and
a fitting portion fittable in the through hole.

8. The motive power transmission mechanism according to claim 6, wherein the cap main body comprises
a threaded portion screwable into the housing, and
a recess which is fittable to a tool to rotate the cap main body and in which the through hole is disposed.

9. The motive power transmission mechanism according to claim 1, wherein the porous portion comprises porous polytetrafluoroethylene.

10. A steering device comprising a motive power transmission mechanism, the motive power transmission mechanism comprising:
a motor comprising:
an output shaft; and
a motor main body;
a drive pulley configured to rotate together with the output shaft;
a driven pulley;
a belt wound across the drive pulley and the driven pulley to transmit torque from the drive pulley to the driven pulley;
a housing accommodating the drive pulley, the belt, and the driven pulley, the housing comprising a work window which faces the belt and through which the belt undergoes work from outside of the housing; and
a cap configured to close the work window when the work is not performed, the cap comprising a porous portion comprising air-permeability and water-impermeability.

11. The motive power transmission mechanism according to claim 2,
wherein the work window faces a position where the belt is wound on the drive pulley or the driven pulley, and
wherein the work comprises checking how the belt is wound on the drive pulley or the driven pulley.

12. The motive power transmission mechanism according to claim 2,
wherein the work window faces a position where the belt is wound on the drive pulley or the driven pulley, and
wherein the work comprises winding the belt on the drive pulley or the driven pulley.

13. The motive power transmission mechanism according to claim 2,
wherein the work window is opposed to a surface of the belt wound across the drive pulley and the driven pulley, and
wherein the work comprises checking tension of the belt.

14. The motive power transmission mechanism according to any one of claims 11 to 13, wherein the cap comprises
a cap main body comprising a through hole, and
the porous portion inserted in the through hole.
